# EUROPÄISCHE PATENTSCHRIFT

(11) **EP 2 595 823 B1**
(45) Veröffentlichungstag und Bekanntmachung des Hinweises auf die Patenterteilung: **29.06.2016**
(21) Anmeldenummer: 11738963.5
(22) Anmeldetag: 15.07.2011
(51) Int. Cl.: B60G 17/018, B62D 17/00

(54) **VERFAHREN ZUM BETREIBEN EINER MECHATRONISCHEN FAHRWERKEINRICHTUNG EINES KRAFTFAHRZEUGS**
METHOD FOR OPERATING A MECHATRONIC CHASSIS DEVICE OF A MOTOR VEHICLE
PROCÉDÉ PERMETTANT DE FAIRE FONCTIONNER UN DISPOSITIF DE CHÂSSIS MÉCATRONIQUE D'UN VÉHICULE AUTOMOBILE

(30) Priorität: 23.07.2010 DE 102010032073
(43) Veröffentlichungstag der Anmeldung: 29.05.2013
(73) Patentinhaber: Audi AG, 85045 Ingolstadt (DE)
(72) Erfinder: MICHEL, Wilfried, 93339 Riedenburg (DE); MÜLLER, Hugo, 86701 Rohrenfels-Ballersdorf (DE); KOSSIRA, Christoph, 85053 Ingolstadt (DE); MEITINGER, Karl-Heinz, 81667 München (DE); SCHMID, Wolfgang, 85354 Freising (DE)
(86) Internationale Anmeldenummer: PCT/EP2011/003529
(87) Internationale Veröffentlichungsnummer: WO 2012/010277

(56) Entgegenhaltungen:
- EP-A1- 1 892 180
- WO-A1-2009/052914
- JP-A- 2009 227 202
- US-B1- 6 293 561

## Beschreibung

Die Erfindung betrifft ein Verfahren zum Betreiben einer mechatronischen Fahrwerkeinrichtung eines Kraftfahrzeugs gemäß dem Oberbegriff des Patentanspruchs 1.

Ausgegangen ist somit davon, dass eine mechatronische Fahrwerkeinrichtung, die das Einstellen eines Spurwinkels eines Rades sowie eines Sturzwinkels des selben Rades ermöglicht, zwei Stellmotoren aufweist. Diese sollen als Teil einer zugehörigen Anordnung jedoch nicht jeweils für sich nur einen der Winkel einstellen, sondern jeder Stellmotor alleine soll bei seiner Aktivierung gleichzeitig den Spurwinkel des Rades und den Sturzwinkel des Rades verändern.

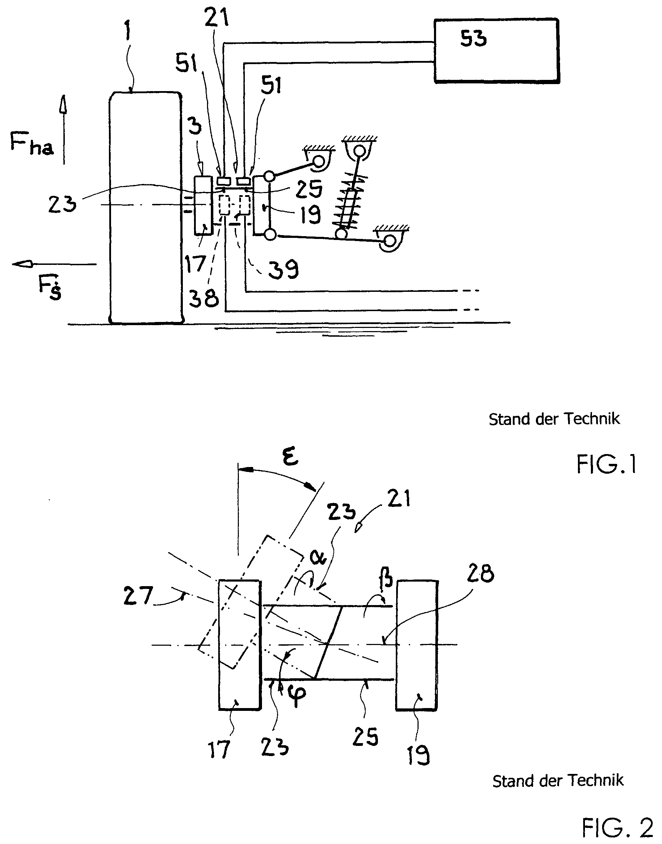

Eine Fahrwerkeinrichtung mit den genannten Eigenschaften ist beispielsweise aus der WO 2009/052914 A1 bekannt. Die dort beschriebene Fahrwerkeinrichtung ermöglicht das Einstellen von Spur- und Sturzwinkel auf besonders einfache, mechanisch unaufwändige Weise. Die Radaufhängung für Kraftfahrzeuge aus der WO 2009/052914 A1 ist in den Figuren 1 und 2 der vorliegenden Anmeldung dargestellt. Ein Radträger 3 weist ein radseitiges Tragelement 17 auf, an welchem ein Fahrzeugrad 1 drehbar gelagert ist. Der Radträger 3 weist ferner ein achsseitiges Tragelement 19 auf. Die beiden Tragelemente 17 und 19 sind über ein Stellglied 21 miteinander gekoppelt. Dieses zwischengeschaltete Stellglied 21 weist ein radseitiges Drehteil 23 auf, das mit dem Tragelement 17 verbunden ist, und es weist ein achsseitiges Drehteil 25 auf, das mit dem Tragelement 19 verbunden ist. Jedes Drehteil 23, 25 ist um eine Achse 27, 28 verdrehbar (Fig. 2). Die Drehung erfolgt mit Hilfe von Stellmotoren 38 und 39. Bei einer Drehung um einen Drehwinkel a bewegt sich das Drehteil 23 mit einer Taumelbewegung um die Drehachse 27. Gleichzeitig oder zeitlich versetzt kann das Drehteil 25 um einen Drehwinkel *β* hinsichtlich des Tragelements 19 gedreht werden. Beim Verdrehen der beiden Drehteile 23, 25 wird das radseitige Drehteil 23 um einen Schwenkwinkel *ϕ* gegenüber dem achsseitigen Drehteil 25 ausgelenkt. Durch geeignetes Einstellen der Drehwinkel α und *β* der jeweiligen Drehteile 23, 25 kann ein gewünschter Spurwinkel *δ* und ein gewünschter Sturzwinkel *ε* des Rades 1 eingestellt werden.

Es ist davon ausgegangen, dass die Stellmotoren in vorbestimmter Weise angesteuert werden, siehe hierzu die Anbindungen 51 für ein Steuergerät 53. Das Steuergerät 53 bearbeitet Soll-Vorgaben betreffend den Spurwinkel *δ* und den Sturzwinkel *ε*, und zur Umsetzung der Soll-Vorgaben werden die Stellmotoren dann in der vorbestimmten Weise angesteuert, wie dies aus der WO 2009/052914 A1 bekannt ist.

Es besteht nun die Gefahr, dass einer der Stellmotoren nicht in Betrieb setzbar ist, indem er entweder selber ausfällt, oder indem die Anbindung 51 zur Steuereinheit 53 nicht funktioniert.

Da sich der Ausfall von solchen Komponenten nicht vorhersagen oder steuern lässt, kann es sein, dass zu einem bestimmten Zeitpunkt eines Ausfalles ein bestimmter Spurwinkel und Sturzwinkel eingestellt sind, die dauerhaft nicht eingestellt bleiben sollen. Andererseits lässt sich durch den verbleibenden, in Betrieb setzbaren Stellmotor alleine nicht jeder beliebige Spurwinkel in Kombination mit jedem beliebigen Sturzwinkel einstellen.

Des Weiteren zeigt die US 6 293 561 B1, die als nächstliegender Stand der Technik betrachtet wird, eine Fahrwerkeinrichtung mit mehreren Stellmotoren, die jeweils dazu ausgelegt sind, bei deren alleiniger Betätigung sowohl einen Radspurwinkel als auch einen Radsturzwinkel zu verändern. Für den Fall eines Ausfalls von einem der Stellmotoren sind die Stellmotoren so ausgebildet, dass wenigstens einer der noch funktionsfähigen Stellmotoren die Funktion des ausgefallenen Stellmotors, zumindest teilweise, übernehmen kann.

Es ist Aufgabe der vorliegenden Erfindung, für erhöhte Sicherheit beim Betrieb eines Kraftfahrzeugs zu sorgen, das eine Fahrwerkeinrichtung mit den eingangs genannten Eigenschaften aufweist.

Die Aufgabe wird durch ein Verfahren mit den Merkmalen gemäß Patentanspruch 1 gelöst: Demnach wird, falls ein erster Stellmotor nicht in Betrieb setzbar ist, ein Notlaufprogramm begonnen, und der zweite Stellmotor wird in anderer als der vorbestimmten Weise angesteuert.

Dies bedeutet, dass der zweite Stellmotor nicht einfach abgeschaltet wird und der zufällig eingestellte Spurwinkel und der zufällig eingestellte Sturzwinkel als solcher akzeptiert werden. Andererseits wird der zweite Stellmotor nicht einfach so betrieben, als würde nach wie vor der erste Stellmotor funktionieren. Dadurch kann in dem Notlaufprogramm der Tatsache Rechnung getragen werden, dass nicht mehr sämtliche Spurwinkel-Sturzwinkel-Kombinationen frei einstellbar sind. Es ist möglich, hier für einen Kompromiss zu sorgen.

Im Vordergrund wird hierbei nicht mehr unbedingt stehen, dass ein Soll-Spurwinkel und ein Soll-Sturzwinkel exakt eingestellt wird, dass eben eine Soll-Vorgabe in vorbestimmter Weise umgesetzt wird. Im Vordergrund steht vielmehr die Sicherheit. Diese lässt sich z. B. anhand der Seitenkraft auf das Rad definieren. Daher ist es erfindungsgemäß vorgesehen, dass der zweite Stellmotor im Notlaufprogramm so angesteuert wird, dass eine Seitenkraft auf das Rad auf einen vorbestimmten Sollwert eingestellt wird.

Der Spurwinkel und der Sturzwinkel beeinflussen gemeinsam die Seitenkraft. Die Seitenkraft ist die Kraft, durch die das Fahrzeug von einer geradlinigen Bewegung in eine Kurvenbewegung gezwungen wird. Zum Erstellen eines bestimmten Fahrzustands kann ein Sollwert für die Seitenkraft definiert werden. Will man nach wie vor eine sichere Lenkung ermöglichen, ist es vorteilhaft, wenn der Sollwert für die Seitenkraft von einem an der Lenkhandhabe des Kraftfahrzeugs eingestellten Lenkwinkel abhängt: Bei einer Kurvenfahrt kann dann der Sollwert für die Seitenkraft genau so sein, dass die gewünschte Kurve sicher durchfahren wird, und bei Geradeausfahrt kann die Seitenkraft im Wesentlichen auf Null eingestellt werden.

Es ist möglich, dass die beiden Stellmotoren im Normalbetrieb nicht sämtliche Winkeleinstellungen vornehmen können, weil es eine softwaremäßige Begrenzung hierfür gibt. Es sind in diesem Fall somit Wertekombinationen für Spur- und Sturzwinkel ausgeschlossen. Da aber durch den Ausfall eines Stellmotors ohnehin zahlreiche Wertekombinationen nicht mehr erzielbar sind, sind bevorzugt im Notlaufprogramm dann wenigstens diejenigen Wertekombinationen für Spur- und Sturzwinkel zugelassen (als zusätzliche Wertekombinationen), die sonst ausgeschlossen sind. Dadurch ist die Flexibilität erhöht, z. B. kann zielgenauer die Seitenkraft auf einen Soll-Wert eingestellt werden.

Das erfindungsgemäße Verfahren kann auch radübergreifend erweitert werden. Insbesondere gibt es die Anordnung mit den beiden Stellmotoren, die gleichzeitig den Spurwinkel und den Sturzwinkel eines Rades verändern, typischerweise ein zweites Mal auf einer dem bisher genannten Rad entgegengesetzten Seite des Kraftfahrzeugs, also kurz gesagt einmal auf der linken Seite, einmal auf der rechten Seite des Kraftfahrzeugs. Erfindungsmäß wird nun bei Ausfall eines Stellmotors einer der Anordnungen auch zumindest ein Stellmotor der jeweils anderen, auf der entgegengesetzten Seite des Kraftfahrzeugs befindlichen Anordnung im Rahmen des Notlaufprogramms anders angesteuert als sonst. Durch Eingreifen an dem Rad, das sich auf einer Seite befindet, die der Seite, an der der Stellmotor nicht in Betrieb setzbar ist, entgegengesetzt ist, kann in besonders hohem Maße für eine gute Stabilität des Kraftfahrzeugs trotz des Ausfalls des ersten Stellmotors auf der einen Kraftfahrzeugseite gesorgt werden.

Das Verfahren wird bevorzugt eingesetzt bei der mechatronischen Fahrwerkeinrichtung, wie sie aus der WO 2009/052914 A1 bekannt ist und oben beschrieben wurde. Hierbei kann eine Steuerelektronik vorgesehen sein, auf deren Ausgestaltung es aber vorliegend im Einzelnen nicht ankommt. Bevorzugt ist jedoch eine Steuereinheit dazu ausgelegt, gegebenenfalls das Notlaufprogramm zu durchlaufen.

In einem Aspekt wird eine mechatronische Fahrwerkeinrichtung bereitgestellt, bei der die Steuereinrichtung das Durchlaufen des Notlaufprogramms ermöglicht.

Nachfolgend werden bevorzugte Ausführungsformen der Erfindung unter Bezug auf die Zeichnungen beschrieben, in der
- Fig. 1: eine schematische Schnittansicht einer mechatronischen Fahrwerk-einrichtung gemäß dem Stand der Technik veranschaulicht und
- Fig. 2: in entsprechender Darstellung genauer den bei der mechatronischen Fahrwerkeinrichtung aus Fig. 1 eingesetzten Radträger veranschau-licht,
- Fig.: 3 eine schematische Darstellung für die Hierarchie von Steuergeräten in einem Kraftfahrzeug ist, in dem die vorliegende Erfindung eingesetzt werden kann, und
- Fig. 4: ein Flussschaubild für die Erläuterung einer Ausführungsform des er-findungsgemäßen Verfahrens ist.

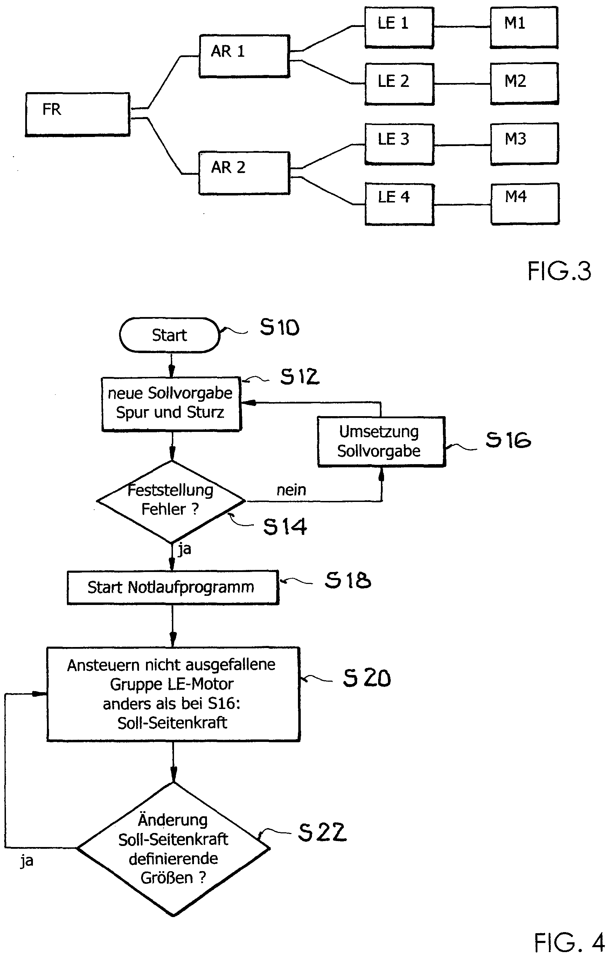

Bei einem erfindungsgemäßen Kraftfahrzeug soll an beiden Rädern einer Achse die mechatronische Fahrwerkeinrichtung gemäß Fig. 1 bereitgestellt sein. In Fig. 3 sind die jeweiligen Stellmotoren 38 und 39 für die linke Seite als M1 und M2 bezeichnet, für die rechte Seite als M3 und M4 bezeichnet. Den Stellmotoren M1 bis M4 sind jeweils elektronisch Steuereinheiten zugeordnet, die auch als "Leistungselektronik" bezeichnet sind, und die deswegen mit dem Kürzel LE1 bis LE4 abgekürzt sind. Sie entsprechen der Anbindung 51 aus Fig. 1. Je zwei solcher Leistungselektroniken ist ein Steuergerät übergeordnet, das man auch als "Aktorenregler" bezeichnen kann, und dem Steuergerät 53 aus Fig. 1 entspricht. Der Aktorenregler 1 ist als "AR1" in Fig. 3 für die Stellmotoren M1 und M2 am linken Rad zuständig, der Aktorenregler "AR2" für die rechte Seite. Den beiden Aktorenreglern AR1 und AR2 ist dann noch ein Fahrwerksregler FR (Steuergerät) übergeordnet.

Im Fahrwerksregler wird festgelegt, welcher Spurwinkel und welcher Sturzwinkel einzustellen ist. Die Aktorenregler AR1 und AR2 legen dann jeweils fest, welcher Stellmotor welche Drehung vollführen soll. Entsprechend geben die Aktorenregler AR1 und AR2 Befehle an die Leistungselektroniken LE1 und LE2 bzw. LE3 und LE4, die daraufhin für eine Beaufschlagung der zugehörigen Motoren M1 und M2 bzw. M3 und M4 mit Strom sorgen. Das erfindungsgemäße Verfahren spielt sich auf der Ebene der Aktorenregler AR1 und AR2 ab und wird jeweils von einem von ihnen ausgeführt.

Grundsätzlich ist auch eine Verwirklichung des Verfahrens in einer Ausführungsform auf Ebene des Fahrwerkreglers FR möglich, dies ist aber nicht bevorzugt.

Das erfindungsgemäße Verfahren beginnt gemäß Fig. 4 in Schritt S10, und der erste tatsächliche Schritt beinhaltet, dass eine neue Sollvorgabe für Spur und Sturz durch den Fahrwerksregler FR gemacht wird und von einem Aktorenregler AR1, AR2 empfangen wird. Es wird nun in Schritt S14 durch die Aktorenregler AR1 und AR2 geprüft, ob ein Fehler der nachgeordneten Einheiten LE1, ME1 oder LE2, ME2 aufgetreten ist. (Es ist hier davon ausgegangen, dass lediglich ein Fehler auf einmal auftritt.) Solange kein Fehler auftritt, wird die Soll-Vorgabe gemäß Schritt S16 durch den Aktorenregler AR1 umgesetzt, wie oben beschrieben. In Schritt S12 wird dann eine neue Soll-Vorgabe gegeben, und es wird wieder in Schritt S14 die Prüfung auf einen Fehler durchgeführt. Sollte irgendwann einmal in Schritt S14 ein Fehler festgestellt werden, z. B. weil der Motor M1 ausgefallen ist oder die zugehörige Leistungselektronik LE1 ausgefallen ist, oder beides, wird gemäß Schritt S18 ein Notlaufprogramm gestartet. Der zugehörige Aktorenregler AR1 steuert dann die nicht ausgefallene Gruppe aus der Leistungselektronik LE2 und dem Motor M2 an, und zwar auf eine andere Weise, als er dies gemäß Schritt S16 tun würde: Bei der Umsetzung der Soll-Vorgabe ist nämlich davon ausgegangen, dass Steuerbefehle an beide Leistungselektroniken LE1 und LE2 gehen können. Vorliegend gehen aber lediglich nur noch Steuerbefehle an die Leistungselektronik LE2, damit der Motor M2 aktiviert wird, und dem Ausfall des Motors M1 bzw. seiner zugehörigen Leistungselektronik LE1 ist Rechnung getragen. Insbesondere wird dafür gesorgt, dass eine Seitenkraft F_{S}, die senkrecht zur Fahrzeughochachse Fha definiert und in Fig. 1 dargestellt ist, auf einen Sollwert oder möglichst nahe an diesen geregelt wird. Anstelle der ursprünglich vom Fahrwerkregler FR vorgegebenen Spur-Sturz-Kombination liegt dieser eine neue Sollvorgabe für Spur und Sturz fest, die in der aktuellen Fahrsituation zu einem Wert für die Seitenkraft F_{S} führt, der möglichst nahe an dem durch die ursprüngliche Spur-Sturz-Kombination festgelegten Wert für die Seitenkraft liegt.

In Schritt S22 wird dann geprüft, ob die die Soll-Seitenkraft definierenden Größen sich geändert haben. Als solche Größe sei beispielsweise der Lenkwinkel genannt, der an einer Lenkhandhabe des Kraftfahrzeugs eingestellt ist: je größer der Lenkwinkel, desto größer die Soll-Seitenkraft. Weitere die Soll-Seitenkraft definierenden Größen sind die Geschwindigkeit oder die Drehzahl am Rad 1.

Nach einer Änderung der die Soll-Seitenkraft definierenden Größen wird abermals zum Schritt S20 übergegangen und auf die neue Soll-Seitenkraft geregelt.

Das Verfahren gemäß Fig. 4 endet mit der Reparatur des Fehlers. Damit ein Fahrzeughalter sein Kraftfahrzeug zur Reparatur vorstellt, kann gegebenenfalls ein Warnsignal abgegeben werden, insbesondere gleichzeitig mit dem Schritt S18.

## Patentansprüche

1. Verfahren zum Betreiben einer mechatronischen Fahrwerkeinrichtung eines Kraftfahrzeugs, die zwei Stellmotoren (38, 39) als Teil einer solchen Anordnung aufweist, dass sie bei ihrer Aktivierung jeweils alleine gleichzeitig einen Spurwinkel (*δ*) eines Rades und einen Sturzwinkel (*ε*) des Rades verändern, wobei die Stellmotoren (38, 39) aufgrund von Soll-Vorgaben in vorbestimmter Weise angesteuert werden, wobei falls ein erster Stellmotor nicht in Betrieb setzbar ist, ein Notlaufprogramm begonnen wird und der zweite Stellmotor in anderer als der vorbestimmten Weise angesteuert wird,
**dadurch gekennzeichnet, dass**
der zweite Stellmotor im Notlaufprogramm so angesteuert wird, dass eine Seitenkraft auf das Rad auf einen vorbestimmten Sollwert eingestellt wird.

2. Verfahren nach Anspruch 1,
**dadurch gekennzeichnet, dass**
der Sollwert von einem an einer Lenkhandhabe eingestellten Lenkwinkel abhängt.

3. Verfahren nach Anspruch 1,
**dadurch gekennzeichnet, dass**
die Seitenkraft minimiert wird.

4. Verfahren nach einem der vorhergehenden Ansprüche,
**dadurch gekennzeichnet, dass**
im Notlaufprogramm zusätzliche Wertekombinationen für Spur- und Sturzwinkel zugelassen sind.

5. Verfahren nach einem der vorhergehenden Ansprüche, bei der zu einem weiteren Rad, insbesondere bei beiden Rädern auf einander entgegengesetzten Seiten, eine Anordnung bereitgestellt ist, bei der zwei Stellmotoren gleichzeitig ein Spurwinkel und ein Sturzwinkel des weiteren Rades verändern, wobei auch diese beiden Stellmotoren aufgrund von Soll-Vorgaben in vorbestimmter Weise angesteuert werden, **dadurch gekennzeichnet, dass**
bei dem Notlaufprogramm auch zumindest einer der beiden Stellmotoren der Anordnung für das weitere Rad in anderer als der vorbestimmten Weise angesteuert wird.

6. Verfahren nach einem der vorhergehenden Ansprüche, eingesetzt bei einer mechatronischen Fahrwerkeinrichtung, bei der ein Radträger (3) ein radseitiges, ein Fahrzeugrad (1) drehbar lagerndes Tragelement (17) und ein achsseitiges Tragelement (19) aufweist, die über ein Stellglied (21) miteinander gekoppelt sind, welches ein radseitiges Drehteil (23) und ein achsseitiges Drehteil (25) aufweist, wobei die Drehteile um Drehachsen (27, 29) durch je einen Stellmotor (38, 39) zueinander verdrehbar sind.

7. Mechatronische Fahrwerkeinrichtung mit einem Radträger (3), der ein radseitiges, ein Fahrzeugrad (1) drehbar lagerndes Tragelement (17) und ein achsseitiges Tragelement (19) aufweist, die über ein Stellglied (21) miteinander gekoppelt sind, das ein radseitiges Drehteil (23) und ein achsseitiges Drehteil (25) aufweist, welche um Drehachsen durch je einen Stellmotor (38, 39) zueinander verdrehbar sind, wobei die Stellmotoren durch Steuereinrichtungen (AR1, AR2, FR) ansteuerbar sind, die zur Ausführung des Verfahrens gemäß einem der Ansprüche 1 bis 4 ausgelegt sind.

## Claims

1. Process for operating mechatronic chassis equipment for a motor vehicle, which has two servo-motors (38, 39) as part of such equipment, which when activated in each case independently change the toe angle (*δ*) of a wheel and a camber angle (*ε*) of the wheel, in which case the servo-motors (38, 39) are steered in a specified manner on the basis of their nominal details, in which case if one of the servo-motors is not working a fail-safe program starts and the second servo-motor is steered in a manner other than the specified manner, **characterised in that** the second servo-motor in the fail-safe program is steered in such a way that a lateral force on the wheel is set to a specified nominal value.

2. Process according to claim 1, **characterised in that** the nominal value is dependent on a steering angle set on a steering handle.

3. Process according to claim 1, **characterised in that** the lateral force is minimised.

4. Process according to one of the aforementioned claims, **characterised in that** in the fail-safe program additional combinations of values are permitted for toe angle and camber angle.

5. Process according to one of the aforementioned claims, in which for a further wheel, in particular with both wheels placed on opposing sides, an arrangement is provided in which the two servo-motors change a toe angle and a camber angle of the further wheel simultaneously, in which case both of these servo-motors are also steered in a specified manner on the basis of nominal values, **characterised in that** in the fail-safe program at least one of the two servo-motors in the arrangement for the further wheel is steered in a manner other than the specified one.

6. Process according to one of the aforementioned claims used with mechatronic chassis equipment, in which a wheel-mount (3) has a wheel-side, rotatable supporting bearing element (17) for a vehicle wheel (1) and a supporting element on the axis side (19), which are coupled to one another via an actuator (21), which has a rotating part (23) on the wheel side and a rotating part on the axis side (25), in which case the rotating parts can be turned around rotational axes (27, 29), each by one servo-motor (38, 39) towards one another.

7. Mechatronic chassis equipment with a wheel-mount (3) which has a wheel-side, rotatable supporting bearing element (17) for a vehicle wheel (1) and an axis-side supporting bearing element (19) which are coupled to one another via an actuator (21), which has a rotating part (23) on the wheel side and a rotating part on the axis side (25), which can each be turned around rotational axes by one servo-motor in each case (38, 39) towards one another, in which case the servo-motors can be steered by steering equipment (AR1, AR2, FR) which is designed for carrying out the process according to one of the claims 1 to 4.

## Revendications

1. Procédé de fonctionnement d'un dispositif de roulement mécatronique d'un véhicule à moteur, qui présente deux servomoteurs (38, 39) en tant que partie d'un aménagement tel qu'ils modifient, lors de leur activation, respectivement, en mode individuel et simultanément un angle de pincement (δ) d'une roue et un angle de carrossage (ε) de la roue, dans lequel les servomoteurs (38, 39) sont commandés en raison de dispositions théoriques de manière prédéterminée, dans lequel, au cas où un premier servomoteur ne peut être mis en marche, un programme d'urgence est démarré et le second servomoteur est commandé d'une manière autre que celle prédéterminée,
**caractérisé en ce que** :
le second servomoteur est commandé dans le programme d'urgence de sorte qu'une force latérale soit réglée sur la roue à une valeur théorique prédéterminée.

2. Procédé selon la revendication 1,
**caractérisé en ce que** :
la valeur théorique dépend d'un angle de direction réglé sur une manette de direction.

3. Procédé selon la revendication 1,
**caractérisé en ce que** :
la force latérale est minimisée.

4. Procédé selon l'une quelconque des revendications précédentes,
**caractérisé en ce que** :
des combinaisons de valeurs supplémentaires dans le programme d'urgence sont admises pour l'angle de pincement et l'angle de carrossage.

5. Procédé selon l'une quelconque des revendications précédentes, dans lequel on affecte à une autre roue, en particulier sur les deux roues disposées sur les côtés mutuellement opposés, un aménagement dans lequel deux servomoteurs modifient simultanément un angle de pincement et un angle de carrossage de l'autre roue, dans lequel ces deux servomoteurs sont également commandés en raison de dispositions théoriques de manière prédéterminée, **caractérisé en ce que**,
dans le programme d'urgence, au moins l'un des deux servomoteurs de l'aménagement est également commandé pour l'autre roue de manière différente de celle prédéterminée.

6. Procédé selon l'une quelconque des revendications précédentes, utilisé dans un dispositif de roulement mécatronique, dans lequel un support de roue (3) présente un élément de support (17) côté roue montant à rotation une roue (1) du véhicule et un élément de support côté essieu (19) qui sont couplés l'un à l'autre via un organe de réglage (21) qui présente une partie rotative côté roue (23) et une partie rotative côté essieu (25), dans lequel les parties rotatives peuvent être soumises à une rotation l'une par rapport à l'autre autour d'axes de rotation (27, 29) par respectivement un servomoteur (38, 39).

7. Dispositif de roulement mécatronique avec un support de roue (3), qui présente un élément de support (17) côté roue montant à rotation une roue (1) du véhicule et un élément de support côté essieu (19), qui sont couplés l'un à l'autre via un organe de réglage (21), qui présente une partie rotative côté roue (23) et une partie rotative côté essieu (25), qui peuvent être soumises à une rotation l'une par rapport à l'autre autour d'axes de rotation par respectivement un servomoteur (38, 39), dans lequel les servomoteurs peuvent être commandés par des dispositifs de commande (AR1, AR2, FR) qui sont conçus pour réaliser le procédé selon l'une quelconque des revendications 1 à 4.
